# EUROPÄISCHE PATENTANMELDUNG

(11) **EP 2 584 374 A1**
(43) Veröffentlichungstag der Anmeldung: **24.04.2013**
(21) Anmeldenummer: 12007234.3
(22) Anmeldetag: 19.10.2012
(51) Int. Cl.: G01S 13/76, G01S 5/08

(54) **Peilkorrekturverfahren**

(30) Priorität: 21.10.2011 DE 102011116685
(71) Anmelder: EADS Deutschland GmbH, 85521 Ottobrunn (DE)
(72) Erfinder: Konle, Wolfgang, 88048 Friedrichshafen (DE); Pagel, Jürgen, 88682 Salem-Beuren (DE); Kottke, Thomas, 71139 Ehningen (DE)
(74) Vertreter: Meel, Thomas

(57) **Zusammenfassung**

Die Erfindung betrifft ein Peilkorrekturverfahren für Peilsysteme mit folgenden Verfahrensschritten:
- das AIS-Transpondersignal einer Plattform (S1,S2) wird empfangen und isoliert, wobei Signalanteile die nicht zu dem betrachteten Signal gehören unter Ausnutzung der Kenntnis der Signalstruktur des AIS-Transpondersignals ausgefiltert werden;
- mit dem derart isolierten Transpondersignal wird eine Peilung durchgeführt;
- das gewonnene Peilergebnis wird mit der Richtung verglichen, die sich aus der im AIS-Transpondersignal enthaltenen Positions-Meldung der Plattform (S1,S2) ergibt;
- es wird eine Plausibilitätsprüfung durchgeführt, ob das Peilergebnis mit der im AIS-Transpondersignal enthaltenen Positions-Meldung vereinbar ist;
- aus plausiblen Abweichungen zwischen dem Peilergebnis und der sich aus der Positions-Meldung ergebenden Richtung der Plattform (S1,S2) werden Korrekturwerte für die Peilung bestimmt.

## Beschreibung

Die Erfindung betrifft ein Peilkorrekturverfahren zur Korrektur eines insbesondere luftfahrzeuggestützten Peilersystems. Das Peilersystem kann z.B. auf einem bemannten oder unbemannten Luftfahrzeug angeordnet sein, z.B. auf einem global operierenden UAV (unmanned aerial vehicle) zur Signalaufklärung. Darüber hinaus kann es sich aber auch um ein stationäres, landgestütztes Peilersystem handeln, z.B. zur Hafenüberwachung.

Bei bekannten Peilkorrekturverfahren werden im Vorfeld der Anwendung Korrekturwerte zur Peilung aufgenommen und in einer Korrekturtabelle abgelegt. Bei diesen im Vorfeld aufgenommenen Werten können die im Einsatz auftretenden Umwelteinflüsse nicht berücksichtigt werden.

Prinzipiell können jedoch Messungenauigkeiten in der Regel auch durch Kalibrierung nicht vollständig beseitigt werden, da sie unter anderem auch von Umweltbedingungen wie z.B. inhomogenes Vereisen eines Radoms oder atmosphärischen Bedingungen, abhängig sein können.

Um die Sicherheit und Lenkung des internationalen Schiffsverkehrs zu verbessern, wird seit einigen Jahren ein Funksystem unter der Bezeichnung AIS (Automatic Identification System) eingesetzt, das von der Internationalen Seeschifffahrts-Organisation als verbindlicher Standard angenommen wurde. Dabei sind Schiffe mit weitreichenden Transpondern ausgestattet, die schiffsspezifische Daten aussenden, darunter auch dynamische Schiffsdaten wie Schiffsposition, Vorausrichtung, Geschwindigkeit etc. AIS-Signale werden darüber hinaus auch von stationären Plattformen, insbesondere Leuchttürmen ausgesandt.

Aus der US 2011/0163908 A1 ist es bekannt, die Zuverlässigkeit eines AIS-Signals derart zu prüfen, dass durch eine Peilung sowie Laufzeitmessung die Position des AIS-Senders bestimmt und mit der im AIS-Signal enthaltenen Positionsinformation verglichen wird.

Die US 2009/0326816 A1 beschreibt ein Verfahren zur Lagekorrektur bei einem Trägheitsnavigationssystem, wobei die Korrektur unter Einbeziehung des aktuellen Richtungsvektors der Sonne erfolgt.

Der Erfindung liegt die Aufgabe zugrunde, ein Peilkorrekturverfahren anzugeben, das mit hoher Zuverlässigkeit während des Einsatzes durchgeführt werden kann.

Diese Aufgabe wird mit dem Verfahren nach Anspruch 1 gelöst. Vorteilhafte Ausführungen sowie ein Aufklärungsverfahren, das die Ergebnisse des erfindungsgemäßen Verfahrens nutzt, sind Gegenstände weiterer Ansprüche.

Mit dem erfindungsgemäßen Verfahren können Messungenauigkeiten der Peilung während des Einsatzes flexibel unter den herrschenden Einsatzbedingungen ausgeglichen werden.

Die Erfindung führt insbesondere bei bewegten Peilsystemen, die naturgemäß extremen Umwelteinflüssen ausgesetzt sind, zu einer erheblichen Verbesserung der Leistungsfähigkeit des Peilsystems.

Das erfindungsgemäße Verfahren nutzt das standardisierte, beliebig verfügbare AIS-Transpondersignal von insbesondere schwimmender oder stationärer Plattformen, welche ihre Eigenposition fortlaufend melden, zur Durchführung der Peilerkorrektur. Die Transpondersignale haben eine charakteristische Struktur und können daher auf einfache Weise identifiziert und von dem sonstigen Signalhintergrund isoliert werden.

Gemäß der Erfindung werden zunächst AIS-Transpondersignale gleichzeitig in allen Antennensegmenten des Peilersystems isoliert. Isoliert heißt hierbei, alle Beiträge des empfangenen Signals wegzufiltern, die nicht zum betrachteten AIS-Signal gehören. Bei dieser Filterung wird ausgenutzt, dass Struktur und Inhalt des AIS- Signals detailliert bekannt ist. Mit den isolierten Signalen werden dann unter Verwendung herkömmlicher Peilverfahren Peilungen durchgeführt. Hinsichtlich der zu verwendenden Peilverfahren bestehen keine Einschränkungen. Anschließend werden die derart ermittelten Peilwerte mit den Richtungen der betreffenden AIS-Plattform, welche sich aus den im AIS-Signal enthaltenen Positionsdaten ergeben, verglichen.

Kann nach Durchführung einer Plausibilitätsprüfung davon ausgegangen werden, dass die gesendete AIS-Position zu der Peilung gehört, wird entsprechend der geometrischen Richtung der gesendeten AIS-Position ein Korrekturwert für die Peilung berechnet.

Die Plausibilitätsprüfung ist insbesondere in Fällen von Bedeutung, in denen zu viele AIS-Sendungen gleichzeitig aus einer Richtung kommen oder wenn die AIS-Plattform absichtlich oder versehentlich falsche Positionen meldet.

Die Plausibilitätsprüfung der empfangenen AIS-Information auf Zugehörigkeit zur Peilung erfolgt z.B. durch Einbeziehung der Peilungenauigkeit des Peilsystems. Liegt die empfangene AIS-Position im Vergleich zu dem Ergebnis der durchgeführten Peilung auch bei Durchführung mehrerer Peilungen systematisch außerhalb der zulässigen Grenzen der Messungenauigkeit, kann von einer gefälschten AIS-Information ausgegangen werden. Diese AIS-Information kann somit nicht zur Peilerkorrektur verwendet werden.

Im Falle von Mehrdeutigkeiten, wenn z.B. mehrere AIS-Positionen oder mehrere Peilungen außerhalb der zulässigen Grenzen der Peilungenauigkeit liegen, können diese Mehrdeutigkeiten durch eine angemessene Zahl von Wiederholungen der Peilung unter deutlichen Richtungsänderungen vom Peiler zum Sender aufgelöst werden.

Die mit dem erfindungsgemäßen Verfahren ermittelten Korrekturwerte gelten grundsätzlich nur für den Frequenzbereich des verwendeten AIS-Signals sowie für die entsprechende Empfangsrichtung. Um das Peilersystem bezüglich weiterer Richtungen zu kalibrieren, können AIS-Signale aus anderen Blickrichtungen des Peilersystems herangezogen werden. Alternativ ist es möglich, das Verfahren mit einer geänderten Ausrichtung des Peilersystems durchzuführen, was z.B. bei einem luftfahrzeuggestützten Peilersystem leicht durchführbar ist. Durch entsprechende relative Bewegung des fliegenden Trägers bezüglich der verfügbaren AIS-Sender ergeben sich sukzessive Korrekturwerte über den gesamten Azimut- und Elevationsbereich. Die Korrekturwerte können kontinuierlich verfeinert und verifiziert werden. Sie passen sich zudem automatisch an langsam veränderliche Umweltbedingungen an.

In weiteren Auswerteschritten können weitere Sender auf der AIS-Plattform genutzt werden, um Korrekturwerte für weitere Frequenzbereiche zu erhalten. Hierbei wird ausgenutzt, dass insbesondere schwimmende AIS-Plattformen (Schiffe) in der Regel neben dem AIS-Transponder weitere aktive Funksender auf anderen Frequenzbändern aufweist. Das Verfahren zur Ermittlung der Korrekturwerte für die betreffenden Frequenzbänder ist dasselbe wie bei der Peilung des AIS-Transpondersignals, wobei die aus dem AIS-Transpondersignal bereits bekannte Position der AIS-Plattform verwendet wird.

In einer bevorzugten Ausführung ist das Peilersystem Teil eines Aufklärungssystems, das weitere Aufklärungssensoren an Bord hat. Die sich aus der Durchführung des erfindungsgemäßen Verfahrens ergebende Zuordnung von Emissionen (AIS-Transpondersignale oder die Signale weiterer Emitter der AIS-Plattform) stellen Informationen dar, die in die Ermittlung der Aufklärungslage eingehen können.

Vorteile, die durch die Erfindung erzielt werden:
- Erhöhung der Peilgenauigkeit,
- Eliminierung von systematischen umweltabhängigen Peilfehlern,
- Reduktion von Umwelteinflüssen auf die Leistungsfähigkeit des Peilsystems,
- Erkennen von falschen AIS-Informationen,
- Erkennen von schwimmenden Plattformen,
- Verbesserung der Aufklärungslage..

Die Erfindung wird anhand eines Ausführungsbeispiels unter Bezugnahme auf eine Fig. näher beschrieben. Sie zeigt in schematischer Darstellung das Vorgehen bei der Auflösung von Mehrdeutigkeiten bei der Zuordnung von empfangenen Signalen zu AIS-Plattformen.

Man erkennt zwei schwimmende AIS-Plattformen S1 und S2, deren Signale das luftgestützte Peilersystem zeitlich hintereinander in zwei Positionen P1, P2 detektiert.

Die Bedeutung der einzelnen Signale ist wie folgt:
------ AIS-Signal von Plattform S1
- - - - weiteres Signal von Plattform S1
····· AIS-Signal von Plattform S2
- · · - weiteres Signal von Plattform S2.

In Position P1 des Peilersystems werden die beiden AIS-Signale der Plattformen S1,S2 in fast der selben Richtung detektiert. Die weiteren Emissionen der Plattformen können in den Peilerposition P1 nicht eindeutig einer der beiden Plattformen zugeordnet werden.

Die Peilungen werden deshalb in Sensorposition P2 wiederholt. Von dort aus können nun alle Signale, die dem Peilersystem anhand ihrer AIS-Signatur bzw. ihrer Signalstruktur bekannt sind, erneut detektiert werden. Wegen der an Position P2 günstigeren Geometrie kann dann sowohl die Korrektheit der gemeldeten AIS-Positionen der Plattformen S1 und S2 sowie die Signalzuordnung der weiteren Signale zu den Plattformen S1 bzw. S2 nachgewiesen werden.

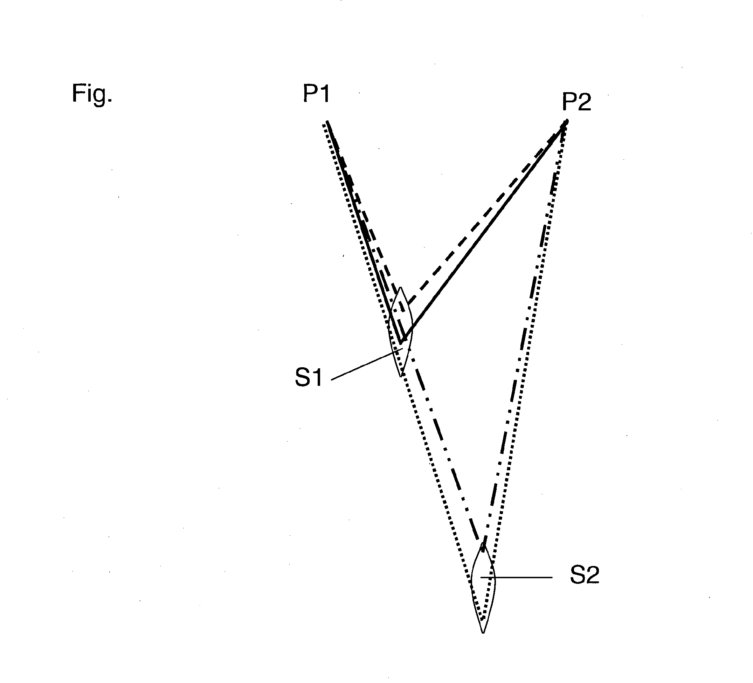

## Patentansprüche

1. Peilkorrekturverfahren für Peilsysteme mit folgenden Verfahrensschritten:
- das AIS-Transpondersignal einer Plattform (S1,S2) wird empfangen und isoliert, wobei Signalanteile die nicht zu dem betrachteten Signal gehören unter Ausnutzung der Kenntnis der Signalstruktur des AIS-Transpondersignals ausgefiltert werden;
- mit dem derart isolierten Transpondersignal wird eine Peilung durchgeführt;
- das gewonnene Peilergebnis wird mit der Richtung verglichen, die sich aus der im AIS-Transpondersignal enthaltenen Positions-Meldung der Plattform (S1,S2) ergibt;
- es wird eine Plausibilitätsprüfung durchgeführt, ob das Peilergebnis mit der im AIS-Transpondersignal enthaltenen Positions-Meldung vereinbar ist;
- aus plausiblen Abweichungen zwischen dem Peilergebnis und der sich aus der Positions-Meldung ergebenden Richtung der Plattform (S1,S2) werden Korrekturwerte für die Peilung bestimmt.

2. Peilkorrekturverfahren nach Anspruch 1, **dadurch gekennzeichnet, dass** anhand von Signalen weiterer Emitter, die der AIS-Trägerplattform (S1,S2) zugeordnet werden können, Peilkorrekturwerte auch für Frequenzbereiche außerhalb des Frequenzbands des AIS-Transpondersignals ermittelt werden.

3. Peilkorrekturverfahren nach Anspruch 1 oder 2, **dadurch gekennzeichnet, dass** durch Wiederholung des Verfahrens unter Änderung der Position des Peilersystems Peilkorrekturwerte für weitere Richtungen ermittelt werden.

4. Peilkorrekturverfahren nach einem der vorangehenden Ansprüche, **dadurch gekennzeichnet, dass** durch Wiederholung des Verfahrens unter Änderung der Position (P1 ,P2) des Peilersystems Mehrdeutigkeiten bei der Zuordnung von empfangenen Signalen zu AIS-Trägerplattformen aufgelöst werden.

5. Aufklärungsverfahren, **dadurch gekennzeichnet, dass** die im Rahmen des Verfahrens nach einem der vorangehenden Ansprüche gefundene Zuordnung von Signalen zu AIS-Trägerplattformen zur Ermittlung der Aufklärungslage genutzt werden.
